# EUROPEAN PATENT SPECIFICATION

(11) **EP 1 837 076 B1**
(45) Date of publication and mention of the grant of the patent: **09.08.2017**
(21) Application number: 06115850.7
(22) Date of filing: 22.06.2006
(51) Int. Cl.: B01J 35/04, B01J 23/89, B01J 37/02, B01D 53/00

(54) **DIESEL PARTICULATE FILTER CATALYST WITH LOW NO2 EMISSIONS**
KATALYSATOR FÜR EINEN DIESELPARTIKELFILTER MIT GERINGEN NO2 EMISSIONEN
CATALYSEUR POUR UN FILTRE A PARTICULES DIESEL AVEC DES EMISSIONS FAIBLES DE NO2

(30) Priority: 20.03.2006 US 385005
(43) Date of publication of application: 26.09.2007
(73) Proprietor: Ford Global Technologies, LLC, Dearborn, MI 48126 (US)
(72) Inventor: Carberry, Brendan, 52074, Aachen (DE); Chigapov, Albert, 52072, Aachen (DE); Dubkov, Alexei, 52064, Aachen (DE)
(74) Representative: Illing, Rolf

(56) References cited:
- EP-A- 1 295 637
- WO-A-94/16817
- WO-A-2005/051523
- US-A- 6 166 283
- US-B1- 6 248 689

## Description

The present invention refers to a catalyst for assisting solid particulate matter (soot) combustion, basically for the catalytic coating of a Diesel particulate filter (DPF).

The invention can advantageously be used in an exhaust gas aftertreatment system of a motor vehicle, basically for reducing the soot and nitrogen dioxide (NO₂) emission from a diesel engine. The invention is, however, not limited to that use but can be generally employed for industrial coal burning.

Increased NO₂ emissions during DPF regeneration are one of the potential issues for diesel particulate filter technology. Specific NO₂ emissions are not yet the subject of the current direct emission legislation, but are taken into account in legislated NOx (NO + NO₂) level. Nitrogen dioxide NO₂ is one of the basic reasons causing the smell of Diesel exhaust and it is dangerous for health. Currently, there is a concern because if particulate filter regeneration is initiated/carried out in closed areas with limited air circulation (like garage, parking areas etc.), it may result in increased NO₂ level exceeding safety limits in surrounding air near vehicle.

The problem of increased NO₂ production during particulate filter regeneration is related to the mechanism of soot combustion in particulate filters.

Different methods to regenerate particulate filters from collected soot are known: (1) non-catalyzed DPF (diesel particulate filter) - "DPF"; (2) DPF with regeneration assisted by fuel-additive catalyst - "ADPF"; (3) DPF with regeneration assisted by a catalyst deposited onto and into the porous walls of the DPF - "catalyzed DPF, or "CDPF". All three systems have in common Diesel oxidation catalyst (DOC) installed upstream of DPF to reduce CO and hydrocarbons (HC) emissions and to provide filter regeneration by HC oxidation to increase the temperature to be high enough to start regeneration. Such Pt-containing DOC is producing NO₂ by NO oxidation on Pt-containing sites. In the case of DPF and ADPF systems, the level of NO₂ concentration is typically lower relative to NO₂ level after Diesel oxidation catalyst (DOC) due to the reaction:

C + N_{O}2 → CO + NO (1)

while the regeneration of CDPF systems leads to opposite effect, namely increased NO₂ emissions, due to additional NO₂ production on Pt-containing CDPF. There is therefore a need, during the regeneration of a CDPF system, to reduce the NO₂ production, and preferably lower it to the level of the DPF and ADPF systems, without reducing the level of efficiency of soot particle combustion.

The inventors have not found any publication having the goal to reduce NO₂ emissions during DPF regenerations, although a few publications have been made regarding NO₂ suppression, basically for DOC (Diesel Oxidation catalysts). As a rule, such NO₂ suppression is active and requires reductant, e.g. urea, fuel or hydrocarbons.

For the purposes of reducing NO₂ production, it is known from JP 2005023921 A to re-direct, under operating conditions involving a high level of NO₂ production by an oxidation catalytic converter, a part of the exhaust gas to a reduction catalytic converter, bypassing the oxidation catalytic converter. For this purpose an additional urea supply is necessary with suitable control and bypass conduit.

JP 2005002968 A discloses a method to reduce the excessive production of NO₂ by selective catalytic reduction using a bypass passage. JP 2005009407 A discloses a method to reduce NO₂ using an oxidation catalytic converter which is coated with platinum in its upstream portion and coated with palladium in its downstream portion in order to reductively eliminate NO₂ formed by the platinum.

JP 2004353619 A discloses a way to reduce NO₂ by a reaction of ozone with NO to N₂, by reduction in catalytic converter arranged downstream in the exhaust pipe.

The above-indicated methods are however relatively complicated and expensive as a consequence of additional reductant supply, control arrangements and/or additional bypass systems used for reducing the NO₂ production.

US 6 248 689 B1 discloses a catalytic composite acting both as particulate filter and as an oxidation catalyst for the diesel soot. The catalytically active particles comprise a group IB metal (preferably Cu) promoted by an iron group VIII metal as Co, Ni and Fe, preferably Fe.

WO 2005/051523 A1 discloses a catalyst for a diesel particulate filter comprising platinum and cerium oxide, wherein the catalyst may further comprise a second oxide of Hf, Zr, Ti or a rare earth other than cerium or combination thereof.

It is an object of the present invention to provide a catalyst for assisting particular matter (soot) combustion, in particular for the catalytic coating of a Diesel particulate filter (DPF), which enables a passive NO₂ reduction without any additional reductant or special active measures to decrease NO₂ emissions during regeneration.

This object is achieved according to the features of the independent claim 1. The invention also provides a particulate filter for filtering out solid particles present in the exhaust gases of an internal combustion engine according to the features of claim 4.

The solution described in this invention is based on decreasing NO₂ production during particulate filter regeneration by applying advanced catalytic formulations to CDPF, for which catalytic composition and methods of preparation are different in comparison with the conventional or commercial catalyzed DPF systems.

Such catalytic formulations simultaneously maintain basic function of efficiently assisting soot regeneration and in the same time decrease NO₂ production rates during DPF regenerations. This is what the inventors have found for some formulations namely Pt, Pd and Pt-Pd combination with active metal oxide component CuO-La₂CuO₄, for which the observed rates of NO₂ production become very close to the cases normally observed for "DPF" and "ADPF".

The further efforts to decrease NO₂ emissions during CDPF regenerations led to new formulations with addition of Co and Fe (iron) oxides to above-mentioned formulations. It provided the decreased NO₂ emissions for catalyzed DPF technology (CDPF) even below a level found for DPF and ADPF technologies, while still providing the same good activity in soot combustion. Additionally, the perovskite-like structure formed after addition of cobalt oxide or cobalt/ iron oxides is very thermally stable.

Details of catalysts preparation are given below, and examples illustrating the effect of applying the novel catalytic formulations of current invention are given in Examples 3.

The invention further concerns the use of a catalyst having the above-described features for the catalytic coating of a porous filter wall of a particulate filter.

The DPFs were prepared according to the present invention and were tested/ evaluated under real conditions on engine dynamometer using active strategy to provide filter regeneration and analytical methods to measure emissions. These filters were compared with Blanc uncoated DPF and commercial catalyzed DPFs available, which had higher PGM loading.

Other features of the invention are to be found in the following description and the appendant claims. The invention is described hereinafter by means of preferred embodiments with reference to the accompanying figures in which:
- Figure 1: shows the average NO₂ emissions measured for corresponding DPFs through the sequence of tests listed above (examples 1- non-catalyzed (DPFs) or fuel-additive (ADPF) technologies);
- Figure 2: shows the average NO₂ emissions measured for corresponding samples through the sequence of tests (examples 2 - reference commercial CDPFs);
- Figure 3: shows the regeneration efficiency averaged over all Drop-to-Idle regenerations (DTIR) measured for the catalyzed DPFs (CDPFs) (examples 2 - reference CDPFs);
- Figure 4: shows the regeneration efficiency measured under steady-state conditions (500°C/20') (examples 2 - reference CDPFs);
- Figure 5: shows the average NO₂ make measured for corresponding CDPFs through the sequence of tests (examples 3 - invention);
- Figure 6: shows the regeneration efficiency averaged over all Drop-to-Idle regenerations (DTIR) measured for the catalyzed DPFs (CDPFs) (examples 3 -invention); and
- Figure 7: shows the activity in soot combustion (Global Rate Constant) measured in steady-state conditions (500°C/20 minutes) (examples 3 - invention);

### General features of preparation of catalyzed DPFs according to invention

The catalytic coatings in accordance with the Examples hereinafter were performed on commercially available DPF substrates of SiC (silicon carbide) or cordierite of a size 14.3764 cm x 15.24 cm (= 5.66 inches x 6 inches). To produce the aluminium oxide (alumina) washcoat, a 10% aluminium oxide sol was mixed with glycerol and saccharose and was applied to the filter and the aluminium oxide layer was thus obtained after drying and calcinations. This alumina washcoat was further stabilized with zirconium and lanthanum oxide in order to increase a thermal stability of washcoat and catalyst during the DPF regeneration procedure. As a result, washcoats with large surface area, of high thermal stability and with an acceptable DPF backpressure were obtained. After that operation of producing the washcoat, the solution containing the respective catalyst precursor was applied to the individual DPFs and the final calcinations were carried out. One of the samples (hereinafter sample 1, 'CDPF #32') was produced using a zirconium (IV) oxide washcoat instead of an aluminium oxide washcoat, with stabilization using lanthanum oxide.

The preparation process for the individual samples was as follows:

### Sample 1 (CDPF #32)

A cordierite filter (mass m = 1048 g) was impregnated, to produce a lanthanum-stabilised zirconium (IV) oxide washcoat, with a solution comprising 250 ml of zirconium acetate, 30 ml of glycerol, 17 g of saccharose and 5 g of lanthanum acetate as well as distilled water with a total volume of 550 ml. A drying step was then carried out at 117°C with the following calcinations at 750°C for 3 hours. The filter was then impregnated with a solution of catalytic precursors, namely dihydrogen hexachloroplatinate, copper nitrate, lanthanum nitrate, iron (II) nitrate, cobalt nitrate and cerium (III) nitrate. The Pt loading was 1.76 g (corresponding to a concentration of 20 g/ft³ ≈ 0.708 g/l of the filter volume), the CuO loading was 17.5 g, the La₂O₃ loading was 34.9 g, the Fe₂O₃ loading was 22.0 g, the Co₃O₄ loading was 12.4 g and the CeO₂ loading was 8.0 g. The CDPF was dried at a temperature of 100°C and then calcined at 750°C for 16 h. The final weight was 1301 g.

### Sample 2 (CDPF #55) (comparative)

A silicon carbide (SiC) filter (mass m = 1921 g) was impregnated with a 10% aluminium oxide sol, modified with 10 ml of glycerol and 2.7 g of saccharose, dried overnight at 100°C and calcined at 285°C for 1 h. The filter was then impregnated with a solution containing lanthanum nitrate (5 mol-% of the aluminium oxide) and zirconium acetate (15 mol-% of the aluminium oxide) with the following drying at 100°C and calcination at a temperature of 800°C for 2h. The filter was then impregnated with a solution with dihydrogen hexachloroplatinate (IV), copper nitrate, lanthanum nitrate, small amounts of yttrium and magnesium nitrates and citric acid (38g). The Pt loading was 1.32 g (corresponding to a concentration of 15 g/ft³ ≈ 0.531 g/l of the filter volume), the CuO loading was 4.4 g, the La₂O₃ loading was 6.4 g, the MgO loading was 1.6 g and the Y₂O₃ loading was 1.9 g. That filter was then calcined at 750°C for 16 h. The final weight was 1995 g.

### Sample 3 (CDPF #56) (comparative)

A silicon carbide (SiC) filter (mass m = 1919 g) was produced as described in relation to sample 2, but in this case an 8% aluminium oxide sol was used, and the La loading was 3 mol-% of the aluminium oxide and the Zr loading was 10 mol-% of the aluminium oxide. A mixed compound of Pt-Pd-CuO-La₂CuO₄ was used as a catalyst, employing a solution comprising palladium nitrate, dihydrogen hexachloroplatinate, copper nitrate, lanthanum nitrate and a small amount of iron (III) nitrate. The Pt loading was 0.44 g (corresponding to a concentration of 5 g/ft³ ≈ 0.177 g/l of the filter volume), the Pd loading was 0.88 g (corresponding to a concentration of 10 g/ft³ ≈ 0.354 g/l of the filter volume), the CuO loading was 3.6 g, the La₂O₃ loading was 4.7 g and the Fe₂O₃ loading was 1.5 g. The final weight was 1979 g.

### Sample 4 (CDPF #63)

A cordierite filter (mass m = 1665 g) was first impregnated with 375 ml of a 10% aluminium oxide sol, modified with 10 ml of glycerol and 2.7 g of saccharose, then dried overnight at 100°C and calcined at 295°C for a duration of 3 h. The filter was then impregnated with a solution containing lanthanum nitrate (5 mol-% of the aluminium oxide) and zirconium acetate (15 mol-% of the aluminium oxide), then filter was dried at 100°C and calcined at 800°C for 2 h. The DPF was then impregnated with a solution containing palladium nitrate, dihydrogen hexachloroplatinate, copper nitrate, lanthanum nitrate, cobalt nitrate, cerium (III) nitrate, iron (III) nitrate and citric acid (32 g). The Pt loading was 0.44 g (corresponding to a concentration of 5 g/ft³ ≈ 0.177 g/l of the filter volume), the Pt loading was 0.88 g (corresponding to a concentration of 10 g/ft³ ≈ 0.354 g/l of the filter volume), the CuO loading was 7.8 g, the La₂O₃ loading was 6.0 g, the Fe₂O₃ loading was 2.0 g, the Co₃O₄ loading was 2.4 g and the CeO₂ loading was 1.1 g. The final weight was 1741 g after drying at 100°C and calcination at 750°C for 16 h.

### Sample 5 (CDPF #64)

A cordierite filter (mass m = 1663 g) was coated with a washcoat in an identical manner to sample 4 using an aluminium oxide sol with the following stabilisation by lanthanum oxide and zirconium (IV) oxide. The filter was then impregnated with a solution containing palladium nitrate, dihydrogen hexachloroplatinate, copper nitrate, lanthanum nitrate, cobalt nitrate, iron (III) nitrate and citric acid (32 g). The Pd loading was 1.23 g (corresponding to a concentration of 14 g/ft³ ≈ 0.45 g/l of the filter volume), the Pt loading was 0.09 g (corresponding to a concentration of 1 g/ft³ ≈ 0.0354 g/l of the filter volume), the CuO loading was 9.4 g, the La₂O₃ loading was 6.9 g, the Fe₂O₃ loading was 2.0 g and the Co₃O₄ loading was 2.8 g. The final weight was 1737 g after drying at 100°C and calcination at a temperature of 750°C for 16 h.

### Sample 6 (CDPF # 65)

A cordierite filter (mass m = 1645 g) was produced as described above for sample 4, but in this case no platinum and cerium compounds were added to the precursor solution. The Pd loading was 0.44 g (corresponding to a concentration of 5 g/ft³ ≈ 0.177 g/l of the filter volume), the CuO loading was 12.6 g, the La₂O₃ loading was 17.2 g, the Fe₂O₃ loading was 2.5 g and the Co₃O₄ loading was 5.1 g. The final weight was 1743 g.

### Testing

The samples produced in accordance with the invention as well as reference (commercial) samples produced in accordance with the state of the art were investigated with a 2.0 litre common rail turbo diesel engine on steady-state dynamometer. Engine was connected via flexible connection with Diesel oxidation catalyst (DOC) upstream of close-coupled DPF. The following sequence of test procedures was applied:

### 1. Test procedures

1.1 High temperature cleaning of the filter at a temperature of 610°C ± 10°C for 30 min with post-injection at a predetermined engine speed/load.
1.2 Pressure drop characterisation and weighing of the filter (with a tolerance of ± 0.1 g) under warm conditions.
1.3 Soot loading at a predetermined speed/load to a predetermined loading limit.
1.4 Pressure drop characterisation and weighing of the filter (with a tolerance of ± 0.1 g) under warm conditions.
1.5 Regeneration in accordance with DTIR regeneration (see process 2) or SSR regeneration (see process 3).
1.6 Pressure drop characterisation and weighing of the filter (with a tolerance of ± 0.1 g) in the warm condition.

### Regeneration

Two different types of regeneration were applied: DTIR (DTIR = 'drop-to-idle regeneration'), which means that after initiation of regeneration determined by decrease of backpressure the engine was switched off to idling conditions. It represents the worst case scenario for regeneration with highest peak temperatures during regeneration. Another type of regeneration was SSR (SSR = steady-state regeneration) with steady-state temperature of 500C during regeneration. This type of regeneration was used as a rule as the first and the last regeneration to evaluate initial and remaining (after many regenerations) activity of catalyst of CDPF in soot combustion. While for DTIR type of regeneration oxygen is a basic oxidant for soot, for SSR the contribution of NO₂- assisted regeneration is significant:

C + O2 → CO, CO2 (2)

C + NO₂ → CO +NO (3)

DTIR-regeneration was performed as follows:

### 2. DTIR-regeneration:

2.1 Shifting to a predetermined engine speed/load and stabilizing of the exhaust gas temperature.
2.2 Starting post-injection with an increase in the through-flow parameter (mg/stroke) from zero to maximum within a predetermined time interval with the target of achieving a temperature of 610°C ± 10°C at the filter inlet.
2.3 Maintaining a maximum post-injection amount, while a temperature of 610°C ± 10°C at the filter inlet is maintained till moment X.
2.4 Moment X: dropping the engine to idle (mass flow rate about 30 kg/h); cutting post-injection with recording of data at 1s intervals until the temperature downstream of the DPF reaches 200°C (Moment X definition: first data point at which the pressure difference across the DPF has remained constant or started to decrease (dP(X-n)>...>dP(X-1)>dP(X).

SSR-regeneration was performed as follows:

### 3. SSR-regeneration:

3.1 Shifting to a predetermined engine speed/load and stabilization of the exhaust gas temperature.
3.2 Starting post-injection with an increase in the through-flow parameter (mg/stroke) from zero to maximum within a predetermined time interval with the target to obtain a predetermined temperature of 500°C at the filter inlet.
3.3 Maintaining the target temperature during a predetermined period of 20 minutes.
3.4 Breaking off post-injection and stabilizing the temperature.

NO₂ emissions during regenerations were calculated as follows:
NO₂ make = Average {Average _{(within 1 test)} [NO₂ on DPF outlet (g/s)/ NO₂ on DPF inlet (g/s)]}. Regeneration efficiency was calculated as a percentage of soot combusted within DPF during regeneration to initial soot loading. This amount was determined from weight difference for DPF before and after regeneration. Soot loading (g) was also determined as a weight difference of DPF before and after soot loading.

The catalyst activities in soot combustion were measured during steady-state regeneration (500°C/20 minutes) and evaluated as Global rate constant k0, by applying the following simplified model:
1. Ideally stirred isothermal reactor
2. Arrhenius dependence of the rate constant: k (T) = k0*T*exp(-Ea/T)
3. Reaction rate: r(T) = k(T)*M^{m}*O°, where
   - r: - reaction rate [g soot/L DPF/sec]
   - T: - absolute temperature at DPF inlet, [K]
   - M: - average soot loading, [g soot/L DPF]
   - m: - kinetic order respect to soot [-]
   - O: - oxygen flux [g/s]
   - o: - kinetic order for oxygen [-]
   - Ea: - activation energy [K]
   - K0: - pre-exponential factor ≡ Global rate constant
The higher K0 reflects the higher catalyst activity in soot combustion.

Dependence of average soot loading vs. time of the experiment is evaluated using:
- Initial soot loading measured by weighing;
- Final soot loading measured by weighing
- Interpolating between initial and final soot loading using pressure drop normalized for exhaust gas volumetric flow rate and temperature
Finally, k0 was found by fitting the above model to experimentally measured data, with k0 as the tuned parameter.

For each testing sample, the regeneration efficiency was evaluated as the average value for all regenerations performed. DPFs of this invention were then compared with blanc (uncoated) DPFs; DPFs using fuel-additive assisted regeneration (ADPF) and catalyzed DPFs (CDPFs) which were commercially available as reference DPFs. These samples and their testing information are presented in Tables 1 to 3 below, including sample identification; filter material type (SiC- silicon carbide or cordierite), amount of regenerations and soot loading range.

### Examples 1: Uncoated and fuel-additive DPFs

| Sample No | Sample type | Test cycles | Soot loading |
|---|---|---|---|
| DPF-A (Uncoated) | SiC-DPF | 5 DTIR | 3.4-12.7 g/l |
| DPF-B | Cordierite-DPF | 5 DTIR | 2.6-8.1 g/l |
| ADPF-A10 (Fuel-additive case) | SiC-ADPF | 12 DTIR | 4.0-17.2 g/l |
| ADPF-B10 | SiC-ADPF | 8 DTIR | 4.8-13.3 g/l |
| ADPF-C | SiC-ADPF | 6 DTIR | 3.8-14.9 g/l |
| ADPF-D | SiC-ADPF | 7 DTIR | 4.2-12.2 g/l |
| ADPF-E10 | SiC-ADPF | 7 DTIR | 3.9-13.3 g/l |

### Examples 2: Catalyzed reference DPFs (state of the art)

| Sample No | Sample type | Test cycles | Soot loading |
|---|---|---|---|
| CDPF-B | Cordierite-Pt-CDPF | 5 DTIR | 2.2-8.3 g/l |
| CDPF-C | Cordierite-Pt-CDPF | 6 DTIR | 2.6-10.1 g/l |
| CDPF-D | Cordierite-Pt-CDPF | 4 DTIR | 2.4-7.2 g/l |
| CDPF-DE | SiC-Pt-Pd (2/1) CDPF | 3 DTIR | 5.0-9.0 g/l |
| CDPF-E | SiC-Pt-CDPF | 6 DTIR | 2.3-9.6 g/l |
| CDPF-F | Cordierite-Pt-CDPF | 4 DTIR | 2.2-7.2 g/l |
| CDPF-G | Cordierite-Pt-CDPF | 6 DTIR | 1.1-5.7 g/l |

### Examples 3: DPFs of invention

| Sample No | Sample type | Test cycles | Soot loading |
|---|---|---|---|
| CDPF-32 | Cordierite-Pt-CDPF | 4 DTIR | 2.2-7.0 g/l |
| CDPF-55 | SiC-Pt-CDPF | 4 DTIR | 3.9-10.4 g/l |
| CDPF-56 | SiC-Pt-Pd (1/2) CDPF | 4 DTIR | 5.0-10.9 g/l |
| CDPF-63 | Cordierite-Pt-Pd (1/2) CDPF | 5 DTIR | 2.4-8.3 g/l |
| CDPF-64 | Cordierite-Pt-Pd (1/14) CDPF | 5 DTIR | 2.2-8.7 g/l |
| CDPF-65 | Cordierite-Pd-CDPF | 5 DTIR | 2.8-8.6 g/l |

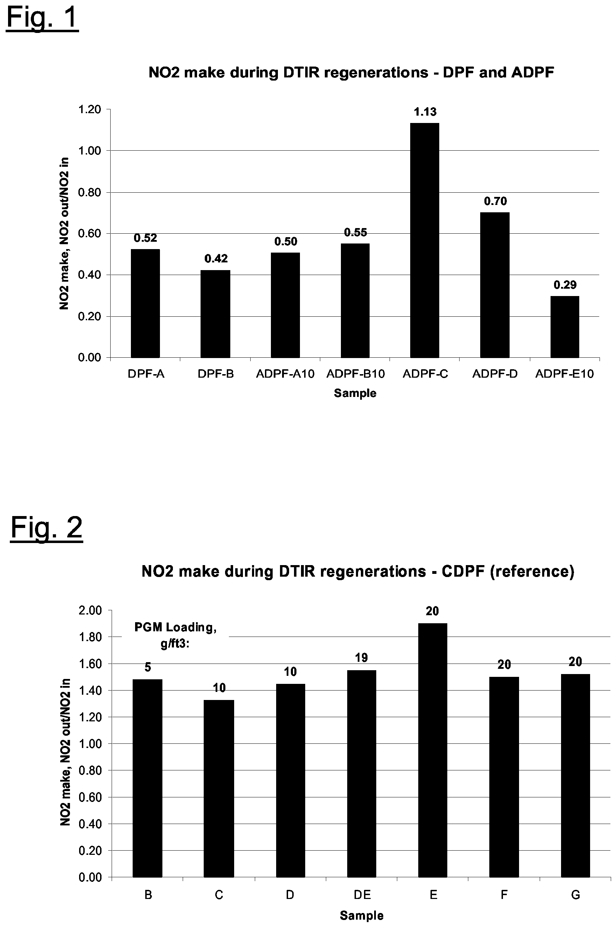

Testing results for examples 1 are given in Figure 1. During the regeneration of DPF (Uncoated Blanc DPF) and fuel-additive ADPF samples (with the exception of the sample ADPF-C), there is no increase in NO₂ production during regeneration. For all these cases, the amount of NO₂ on the DPF outlet is within a value of 0.4-0.70 (with only two exceptions) of the NO₂ amount entering the DPF during regeneration, with average value of ca. 0.60. It shows that non-catalyzed DPFs or fuel-additive DPFs reduce the amount of NO₂, which DOC (Diesel oxidation catalyst) is producing upstream of DPF, due to NO₂ reaction with soot.

Regeneration efficiencies were very high for air-borne catalyst assisted regenerations (ADPF) with soot conversion exceeding typically 90%. For non-catalyzed DPFs, the regeneration efficiencies were lower, from 70 to 90%. Soot conversion was measured by weighing filter before and after regeneration. Regeneration efficiency and activity results will be further used for comparison between state-of-the-art CDPF systems and new formulations for catalyzed DPFs claimed in the present invention.

To be comparable with other technologies and not to introduce a problem with NO₂ emissions during regeneration, catalyzed DPF (CDPF) should not produce more NO₂ compared to ADPF. The above average value of NO₂ make (0.60) can be considered as a target for CDPF.

In contrast, as can be seen from Fig. 2, during the regeneration of the commercially produced CDPF samples, there is a significant increase in NO₂ amount, the NO₂ content at the filter outlet typically being about 30 - 90% higher than at the filter inlet. Obviously, Pt containing catalyst deposited on DPF is generating additional NO₂ by NO oxidation like diesel oxidation catalyst before DPF. It can be also noticed that the addition of Pd to Pt did not decrease the level of nitrogen dioxide emissions during regeneration as can be seen in Figure 2. The numbers above the bars shown in Fig. 2 specify the platinum group metal loading (PGM loading) in g/ft³.

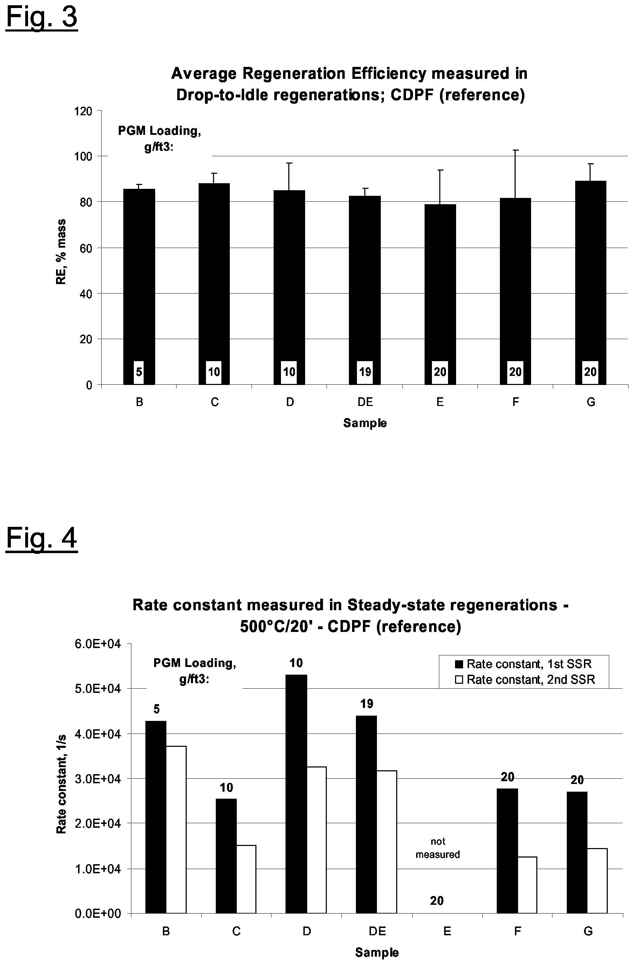

As shown in Fig. 3, the levels of regeneration efficiency for the conventionally produced CDPF samples are typically within 80 - 90% by weight and are generally acceptable.

These results show that the target for NO₂ emissions during regenerations cannot be met by the state- of- the- art CDPF catalysts, and the use of such CDPFs will lead to increase of NO₂ emissions in comparison with non-catalyzed (DPF) and fuel-additive (ADPF) technologies.

Activity of the state-of-the-art catalysts was measured during steady-state regenerations (SSR) of commercial CDPFs as described above. It is necessary to note that due to the lower temperature (500°C), these steady-state regenerations are more NO₂ - assisted regenerations in contrast to drop-to-idle regeneration (600°C), where soot is basically burning by oxygen. It was expected, that the advantage should have the catalysts which are more active in NO oxidation to NO₂ and having the higher Pt loading.

However, the real picture is very complicated as can be seen on Figure 4 and there was no clear correlation. Generally, this low temperature style of regeneration is not practical due to incomplete regeneration and its slow rate, and we have used these steady -state regeneration's values basically to evaluate the thermal stability of catalysts by comparison of k0 for first regeneration with fresh catalyst and k0 for the last regeneration after 4-8 DTIR regenerations. As one can see, k0 was lower for all commercial CDPFs for the last steady-state regeneration that indicates some degradation of catalyst activity after 3-6 regenerations with high peak temperatures.

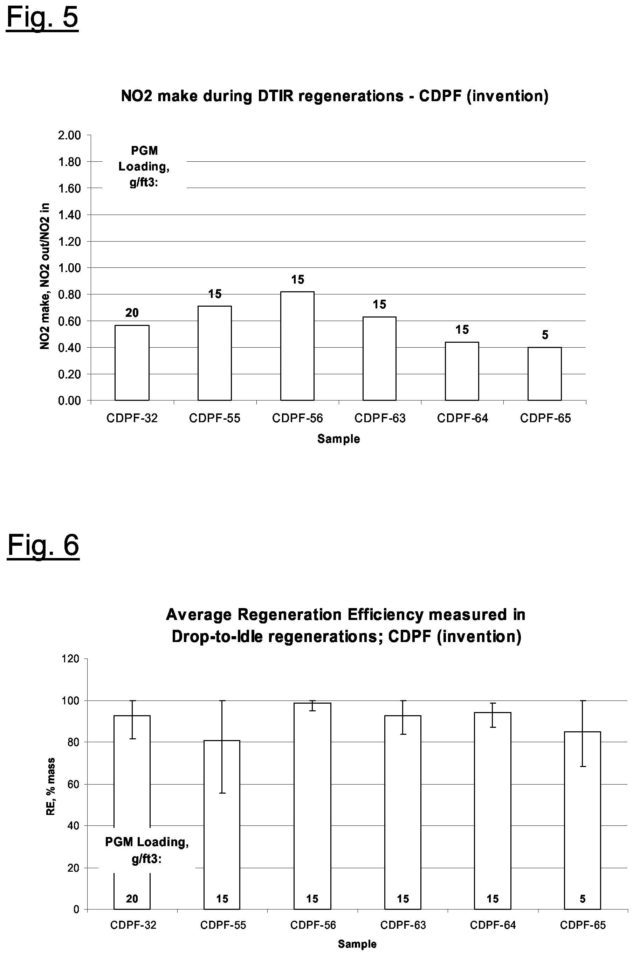

As can be seen from Fig. 5, the NO₂ production during regeneration can be significantly lowered for the CDPF samples prepared in accordance with the invention, wherein the value reaches or even falls below the level of the DPF or ADPF samples respectively. One can see that prepared CDPFs of this invention with precious metal loading within the range 5 -15 g/ft3 (generally, with PGM being within the similar range or lower as it was for commercial CDPFs considered in Example 2), the average NO₂ make for CDPF-32, CDPF-55, CDPF-56, CDPF-63, CDPF-64 and CDPF-65, is 0.59, i.e. very similar to the value observed for DPF and fuel additive assisted DPF (ADPF), shown in Example 1. So, similar to DPF and ADPF systems, in the cases of catalysts of the current invention, there is a decrease in NO₂ amount over the DPF: the amount of NO₂ downstream the DPF outlet is 40% lower in average than the NO₂ amount entering the DPF during regeneration. These results show that the target for NO₂ level of 0.60 measured for DPF and ADPF systems (see Example 1), was achieved.

For two catalyzed DPFs claimed in our previous patent application US 11/385,005, namely CDPF 55 and 56; coated with combination of Pt or Pt-Pd with active metal oxide component CuO- La₂CuO₄, the level of NO₂ emissions during regenerations was close; but slightly higher than the target value of 0.6 as one can see in Figure 5.

In that case, it was possible for the NO₂ production during regeneration to be further reduced by means of the addition of cobalt oxide or iron oxide. Furthermore, it was possible to achieve particularly low values of about 0.40 for those samples (CDPF-64 and CDPF-65) which had no platinum at all (but only palladium as the PGM-component) or only a low platinum content.

It can be seen from Figure 5 that four different CDPFs containing Pt, Pt-Pd or Pd as noble metal component and base metal component CuO- La₂CuO₄ with added Co or Co- Fe oxides revealed the lower level of NO₂ emissions below or near target value. For CDPFs 64 and 65, containing Pd-only or Pd-Pt (with very low Pt loading of only 1 g/ft3 as a noble metal component), the value of NO₂ emissions was especially low, only 0.4 and below even than for non-catalyzed DPFs and fuel-additive ADPF technologies. It may indicate the presence of another process of NO₂ reduction for these catalysts. However, these new formulations are allowing to significantly reducing NO₂ emissions even for Pt- only formulations. The addition of cobalt and iron oxide to CuO- La₂CuO₄ leads also to high thermally stable perovskite- like structure.

Drop-To-Idle (DTIR) regenerations performance for said DPFs with formulations of this invention, are shown in Figure 6. The levels of regeneration efficiency for the CDPF samples according to the invention are within of 80 - 100% by weight, being slightly lower than that for ADPF (Example 1), but generally higher than for standard catalyzed DPFs. High regeneration efficiencies were observed for Pd-based CDPF-64 and CDPF-65; having very low Pt (CDPF- 64) and no Pt at all (CDPF- 65). The current May 2006 Pt prices (1240 US$ per troy oz) is more than 3 times higher than for Pd (384 US$ per troy oz). It indicates that such Pd-based combinations having CuO- La₂CuO₄ and Co (Co-Fe) oxide) are the most attractive from practical point of view due to lower cost, high regeneration efficiency and the lowest NO₂ emissions during DPF regenerations.

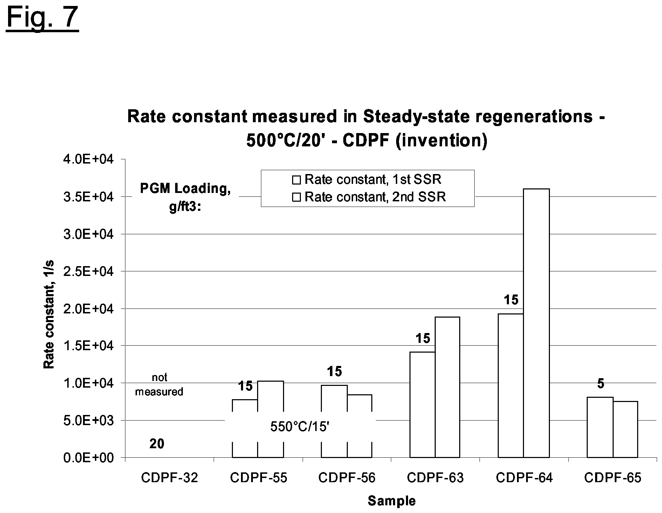

In Figure 7, the catalyst activities in soot combustion under steady-state conditions at 500°C are shown, which were evaluated as Global rate constant k0. It was expected, that for this NO₂ assisted style of regenerations the activity should be lower than for standard CDPF due to the low activity in NO₂ formation. However; the activity of CDPF- 63 and especially surprisingly CDPF-64 with very low Pt loading, was comparable with commercial CDPFs, the activity of aged CDPF-64 after many regenerations was one of the best. It is valuable to note, that an activity of CDPF-63 and especially CDPF-64 is improved after the series of regenerations, if we compare the activity for fresh and aged samples as presented in Fig. 7. It indicates high thermal stability of invented catalysts, meantime the activity of all commercial CDPFs dropped after the series of regenerations. During DTIR regenerations, peak temperatures inside DPFs exceeded 1000-1100 °C and obviously the catalysts of this invention can withstand such temperatures.

Summarizing, CDPF coated with the catalysts according to this invention (Examples 3), provide the same/ lower level of NO₂ emissions as is normally observed for the cases of DPF and fuel-additive assisted DPF (ADPF), (Examples 1), and significantly lower NO₂ level than the state-of-the-art commercial CDPFs coupled with similar/better regeneration activity compared to commercial catalyzed DPF samples (see Examples 2). In addition, such CDPFs prepared according to the invention, have high thermal stability and do not deactivate after severe regenerations in contrast to commercial CDPFs.

## Claims

1. A catalyst for assisting particulate matter (soot) combustion, in particular for the catalytic coating of a Diesel particulate filter (DPF), having a platinum group metal (PGM) component and a metal oxide component,
**characterized in that**
the metal oxide component has CuO-La₂CuO₄, and
the metal oxide component further has a mixture of cobalt oxide (Co₃O₄) and iron oxide (Fe₂O₃) added to CuO-La₂CuO₄.

2. A catalyst according to claim 1,
**characterized in that**
the platinum group metal component contains platinum, platinum-palladium or palladium.

3. Use of a catalyst according claim 1 or 2 for the catalytic coating of a Diesel particulate filter.

4. A particulate filter for filtering out solid particles present in the exhaust gases of an internal combustion engine, comprising a catalyst which has a platinum group metal component and a metal oxide component,
**characterized in that**
the catalyst is a catalyst according to claim 1 or 2.

5. A particulate filter according to claim 4,
**characterized in that**
the platinum group metal component loading is up to 20 g/ft³ (≈ 0.708 g/l), and preferably from 5 g/ft³ to 15 g/ft³ (≈ 0.177 g/l to 0.531 g/l) of the filter volume.

6. A particulate filter according to claim 4 or claim 5,
**characterized in that**
the platinum group metal component contains platinum-palladium having low Pt loading which does not exceed 1 g Pt/ft³ (≈ 0.035 g/l) of the filter volume or contains only palladium to provide the lower cost, lowest NO₂ emissions and highest thermal stability to deactivation during regenerations.

## Patentansprüche

1. Katalysator zur Unterstützung der Verbrennung von Feinstaubpartikeln (Ruß), insbesondere für die katalytische Beschichtung eines Dieselpartikelfilters (DPF), der eine Platinmetall(PM)-Komponente und eine Metalloxidkomponente aufweist,
**dadurch gekennzeichnet, dass**
die Metalloxidkomponente CuO-La₂CuO₄ aufweist und
die Metalloxidkomponente ferner eine Mischung aus Cobaltoxid (Co₃O₄) und Eisenoxid (Fe₂O₃) aufweist, die CuO-La₂CuO₄ zugesetzt ist.

2. Katalysator nach Anspruch 1,
**dadurch gekennzeichnet, dass**
die Platinmetall-Komponente Platin, Platin-Palladium oder Palladium enthält.

3. Verwendung eines Katalysators nach Anspruch 1 oder 2 für die katalytische Beschichtung eines Dieselpartikelfilters.

4. Partikelfilter zum Herausfiltern von in den Abgasen einer Verbrennungskraftmaschine vorhandenen Feststoffteilchen, der einen Katalysator umfasst, der eine Platinmetall-Komponente und eine Metalloxidkomponente aufweist,
**dadurch gekennzeichnet, dass**
der Katalysator ein Katalysator nach Anspruch 1 oder 2 ist.

5. Partikelfilter nach Anspruch 4,
**dadurch gekennzeichnet, dass**
die Beladung mit der Platinmetall-Komponente bis zu 20 g/ft³ (≈ 0,708 g/l) und vorzugsweise von 5 g/ft³ bis 15 g/ft³ (≈ 0,177 g/l bis 0,531 g/l) des Filtervolumens beträgt.

6. Partikelfilter nach Anspruch 4 oder Anspruch 5,
**dadurch gekennzeichnet, dass**
die Platinmetall-Komponente Platin-Palladium mit einer niedrigen Pt-Beladung enthält, die 1g Pt/ft³ (≈ 0,035 g/l) des Filtervolumens nicht übersteigt oder lediglich Palladium enthält, damit geringere Kosten, die niedrigsten NO₂-Emissionen und die höchste thermische Stabilität gegenüber einer Deaktivierung während Regenerierungen gewährleistet sind.

## Revendications

1. Catalyseur destiné à faciliter la combustion de matière particulaire (suie), en particulier pour le revêtement catalytique d'un filtre à particules diesel (DPF), ayant un constituant métallique du groupe du platine (PGM) et un constituant oxyde métallique,
**caractérisé en ce que**
le constituant oxyde métallique a du CuO-La₂CuO₄, et
le constituant oxyde métallique a en outre un mélange d'oxyde de cobalt (Co₃O₄) et d'oxyde de fer (Fe₂O₃) ajouté au CuO-La₂CuO₄.

2. Catalyseur selon la revendication 1,
**caractérisé en ce que**
le constituant métallique du groupe du platine contient du platine, du platine-palladium ou du palladium.

3. Utilisation d'un catalyseur selon la revendication 1 ou 2 pour le revêtement catalytique d'un filtre à particules diesel.

4. Filtre à particules destiné à filtrer les particules solides présentes dans les gaz d'échappement d'un moteur à combustion interne, comprenant un catalyseur qui a un constituant métallique du groupe du platine et un constituant oxyde métallique,
**caractérisé en ce que**
le catalyseur est un catalyseur selon la revendication 1 ou 2.

5. Filtre à particules selon la revendication 4,
**caractérisé en ce que**
la charge en constituant métallique du groupe du platine va jusqu'à 20 g/ft³ (≈ 0,708 g/l) et de préférence de 5 g/ft³ à 15 g/ft³ (≈ 0,177 g/l à 0,531 g/l) du volume du filtre.

6. Filtre à particules selon la revendication 4 ou la revendication 5,
**caractérisé en ce que**
le constituant métallique du groupe du platine contient du platine-palladium ayant une faible charge en Pt qui ne dépasse pas 1 g Pt/ft³ (≈ 0,035 g/l) du volume du filtre ou contient uniquement du palladium pour fournir à moindre coût les plus faibles émissions de NO₂ et la plus grande stabilité thermique à la désactivation pendant les régénérations.
